# EUROPÄISCHE PATENTSCHRIFT

(11) **EP 2 607 133 B1**
(45) Veröffentlichungstag und Bekanntmachung des Hinweises auf die Patenterteilung: **25.02.2015**
(21) Anmeldenummer: 12190116.9
(22) Anmeldetag: 26.10.2012
(51) Int. Cl.: B60K 13/04, B60K 15/035, B60K 15/04

(54) **Füllrohranordnung für einen Flüssigkeitsvorratsbehälter für Kraftfahrzeuge**
Filler tube assembly for a fluid storage container for motor vehicles
Agencement de tuyau de remplissage pour un récipient de réservoir de liquide pour véhicules automobiles

(30) Priorität: 21.12.2011 DE 202011109524 U
(43) Veröffentlichungstag der Anmeldung: 26.06.2013
(73) Patentinhaber: Reutter GmbH, 71397 Leutenbach (DE)
(72) Erfinder: Wilfinger, Kurt, 71563 Affalterbach (DE); Hama, Zanko, 70372 Stuttgart (DE); Wienands, Johannes, 71334 Waiblingen (DE)
(74) Vertreter: DREISS Patentanwälte PartG mbB

(56) Entgegenhaltungen:
- EP-A1- 2 316 685
- WO-A1-02/47983
- DE-U1-202009 001 182
- DE-U1-202010 001 147
- US-B1- 6 945 290

## Beschreibung

Die vorliegende Erfindung bezieht sich auf eine Füllrohranordnung für einen Flüssigkeitsvorratsbehälter für beispielsweise Kraftfahrzeuge nach dem Oberbegriff des Anspruchs 1.

Eine Einrichtung nach dem Oberbegriff des Anspruchs 1 ist aus der DE 20 2010 001 147 U1 bekannt.

Beim Einströmen der Flüssigkeit durch ein Füllrohr einer an einen Vorratstank angeschlossenen Zapfpistole in den Vorratsbehälter wird Luft aus dem Vorratsbehälter verdrängt. Die verdrängte Luft strömt über einen Hohlraum nach außen, der sich zwischen der eingeschobenen Zapfpistole und einer die eingeschobene Zapfpistole umgebenden Innenfläche der Füllrohranordnung befindet. Dazu werden Zapfpistolen und Füllrohranordnungen verwendet, deren Durchmesserdifferenz dazu führt, dass sich solche Hohlräume ergeben.

In der Praxis hat sich gezeigt, dass mit dem Entlüftungs-Luftstrom, der den Flüssigkeitsstrom tangiert, geringe Flüssigkeitsmengen nach außen gelangen können. Dies passiert insbesondere beim Abschalten der Zapfpistole dann, wenn der Füllstand erreicht ist. Dieses beispielsweise Rücksprühen von Flüssigkeit ist nicht nur beim Befüllen mit Diesel oder Benzin sondern insbesondere auch dann nachteilig, wenn es sich bei der Flüssigkeit um eine Harnstoff-Wasser-Lösung handelt, wie sie bei SCR-Systemen an Kraftfahrzeugen zur Stickoxidreduzierung zum Abgas dosiert wird (SCR = selective catalytic reduction). Der Geruch nicht nur der zuletzt genannten Flüssigkeit wird als unangenehm empfunden, so dass eine Freisetzung zu vermeiden ist.

Aufgabe der vorliegenden Erfindung ist es deshalb, eine Füllrohranordnung der eingangs genannten Art zu schaffen, bei der im Wesentlichen vermieden ist, dass Flüssigkeitströpfchen beim Befüllen des Vorratsbehälters, insbesondere beim Abschalten des Befüllvorganges mit der Entlüftungsluft nach außen gelangen.

Zur Lösung dieser Aufgabe sind bei einer Füllrohranordnung der genannten Art die im Anspruch 1 angegebenen Merkmale vorgesehen.

Durch die erfindungsgemäßen Maßnahmen ist erreicht, dass sich der Entlüftungs-Luftstrom und der Flüssigkeitsfluss in Befüllrichtung im Wesentlichen nicht tangieren und dass aufgrund der labyrinthartigen Führung des Entlüftungs-Luftstromes insbesondere beim Abschaltvorgang Flüssigkeitströpfchen praktisch nicht nach außen gelangen können. Die labyrinthartige Entlüftungsführung zwingt dem Entlüftungs-Luftstrom mehrere Richtungsänderungen auf, so dass es bei jeder Richtungsänderung für die möglicherweise mit der Entlüftungsluft mitgerissenen Flüssigkeitströpfchen aufgrund ihrer im Vergleich zur Luft größeren Trägheit schwierig ist, der Richtungsänderung zu folgen. Ein großer Teil der Tröpfchen wird daher an die entsprechenden Umlenkwände prallen und der Schwerkraft folgend in den Vorratsbehälter zurücklaufen.

Ein Ausführungsbeispiel nach den Merkmalen des Anspruchs 2 ergibt sich dann, wenn in der Füllrohranordnung ein Filter eingesetzt ist.

Mit den Merkmalen nach Anspruch 3 ist eine Verstärkung der labyrithartigen Wirkung für den Entlüftungs-Luftstrom erreicht.

Gemäß einer möglichen Ausführungsform vorliegender Erfindung kann gemäß den Merkmalen des Anspruchs 4 das Tauchrohr selbst mit dem ersten Entlüftungs-Abschnitt integrierend verwirklicht sein. Beispielsweise kann dies in der Weise erfolgen, dass die Wandung des Tauchrohres mit axialen Bohrungen versehen ist oder dass das Tauchrohr aus einer Vielzahl zylindrisch angeordneter, axial verlaufender Röhrchen besteht, die einen umfangsseitig dichten Tauchrohrzylinder bilden. Diese Röhrchen können endseitig miteinander unmittelbar oder über einen gemeinsamen Deckel verbunden sein.

Gemäß einem bevorzugten Ausführungsbeispiel gemäß den Merkmalen des Anspruchs 5 ist jedoch das Tauchrohr von einem Außenrohr umgeben, welche beiden Rohre den ersten Entlüftungs-Abschnitt in Form eines Ringraumes begrenzen. Vorteilhafte Ausgestaltungen der weiteren Entlüftungs-Abschnitte ergeben sich aus den Merkmalen eines oder mehrerer der Ansprüche 6 bis 10.

Gemäß den Merkmalen nach Anspruch 11 ist erreicht, dass der erste Entlüftungs-Abschnitt vom einströmenden Flüssigkeitsstrom axial beabstandet ist.

Der Zugangsbereich zur Füllrohranordnung mittels der Zapfpistole kann unmittelbar am Flüssigkeitsvorratsbehälter angeordnet sein, er kann sich jedoch auch in einem relativ großen räumlichen Abstand befinden, so dass es sinnvoll ist, die Merkmale nach Anspruch 12 vorzusehen.

In jedem Falle sind die Merkmale nach Anspruch 13 verwirklicht.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in schematischer längsgeschnittener Darstellung eine Füllsrohranordnung für einen Flüssigkeitsvorratsbehälter für beispielsweise Kraftfahrzeuge,
- Figur 2: in vergrößerter Darstellung gemäß Ausschnitt II der Figur 1 die labyrinthartige Entlüftungsführung vom Vorratsbehälterinnenraum zur Außenatmosphäre während des Flüssigkeits-Befüllvorganges gemäß einem ersten Ausführungsbeispiel vorliegender Erfindung und
- Figuren 3 bis 6: Darstellungen gemäß Figur 2, jedoch bei weiteren Ausführungsbeispielen der Entlüftungsführung vorliegender Erfindung.

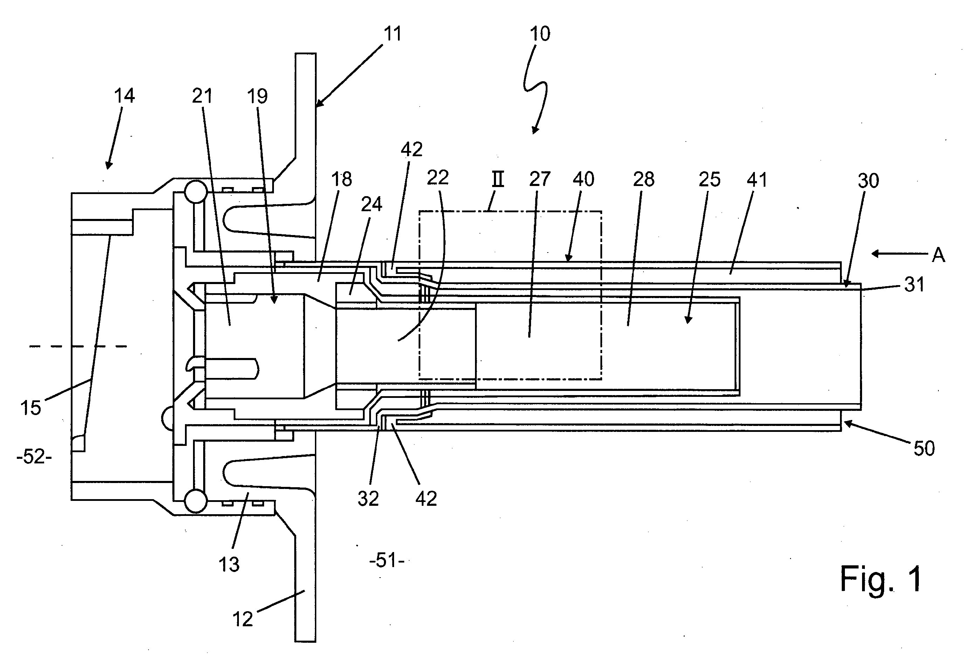

Die in der Zeichnung dargestellte Füllrohranordnung 10 gemäß mehreren Ausführungsbeispielen vorliegender Erfindung ist gemäß Figur 1 an einem Flüssigkeitsvorratsbehälter 11 beispielsweise schraubend befestigt. Der Flüssigkeitsvorratsbehälter 11 ist beispielsweise ein Kraftstofftank (Benzin oder Diesel) oder ein Harnstoff-Tank eines SCR-System eines Kraftfahrzeugs. Es versteht sich, dass eine derartige Füllrohranordnung 10 auch für einen stationären Flüssigkeitsvorratsbehälter 11 Verwendung finden kann. Wie noch erläutert werden wird, können der Zugang, zur Füllrohranordnung 10 mittels Zapfpistole und der Flüssigkeitsvorratsbehälter 11 auch räumlich auseinanderliegen.

Beim dargestellten Ausführungsbeispiel gemäß Figur 1 besitzt die Füllrohranordnung 10 einen Deckelverschlussteil 14, das an einem Schraubstutzen 13 der Wandung 12 des Vorratsbehälters 11 befestigt ist. Der Deckelverschlussteil 14 besitzt in schematisch dargestellter Weise eine federbelastete Verschlussklappe 15, die von einem Einfüllelement, beispielsweise dem Auslaufrohr 17 einer hier nicht dargestellten Zapfpistole 16 entsprechenden Außendurchmessers geöffnet werden kann. Der Deckelverschlussteil 14 ist mit einem nicht dargestellten Deckel schraubend oder bajonettartig oder dergleichen verschließbar.

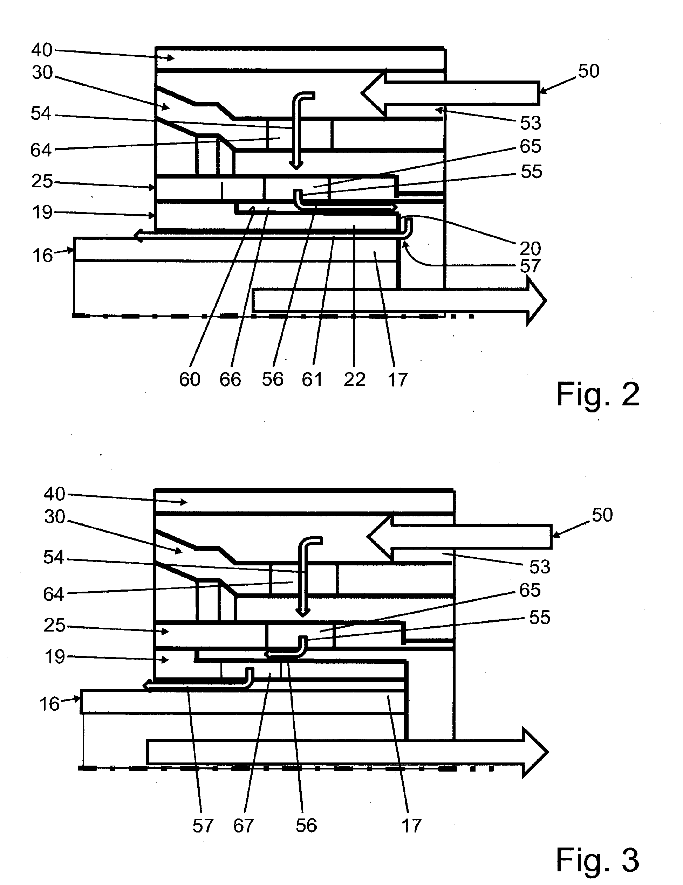

Die Füllrohranordnung 10 besitzt des Weiteren ein Stutzenteil 18 und ein innerhalb des Stutzenteils 18 konzentrisch angeordnetes Führungselement 19 für das in Figur 2 und ff. dargestellte Auslaufrohr 17 der Zapfpistole 16. Das Führungselement 19 besitzt ein eingangsseitig durchmessergroßes Teil 21, das im und mit dem Stutzenteil 18 im Deckelverschlussteil 14 hängend verbunden ist, und ein durchmesserkleineres Teil 22, das innerhalb des Vorratsbehälters 11 angeordnet ist. Das durchmesserkleinere Teil 22 des Führungselements 19 ist von einem Magneten 24 konzentrisch umgeben, der in einer Nut des Stutzenteils 18 aufgenommen und gehalten ist. Der Ringmagnet 24 dient als Verschlusssteuerung der Zapfpistole 16 in der Weise, dass eine Flüssigkeitszufuhr durch die Zapfpistole 16 nur dann freigegeben wird, wenn das passende Auslaufrohr 17 der Zapfpistole 16 bis zum durch die Verjüngung des Führungselementes 19 gebildeten Anschlag in den Stutzenteil 18 eingeschoben ist.

Der durchmesserkleinere Teil 22 des Führungselements 19 ist von einen Filter 25 umgeben, der ebenfalls gestuft zylindrisch ist, wobei dessen durchmessergrößerer Teil 26 den durchmessergrößeren Teil 21 des Führungselements 19 umgibt, während dessen durchmesserkleinerer Teil 27, der mit einem zylindrischen Filtergewebeteil 28 axial verbunden ist, den durchmesserkleineren Teils 22 des Führungselements 19 axial teilweise umgibt, jedoch zum größten Teil über diesen axial hinausragt.

Der durchmesserkleinere Teil 22 des Führungselements 19 sowie der durchmesserkleinere Teil 27 und das Filtergewebeteil 28 des Filters 25 sind konzentrisch von einem Tauchrohr 30 umgeben derart, dass ein Ringspalt 31 gebildet ist. Das Tauchrohr 30, durch das beim Befüllen des Vorratsbehälters 11 im Ausgangsbereich die Flüssigkeit strömt, ist an seinem dem Deckelverschlussteil 14 zugewandten Ende aufgeweitet und über den Stutzenteil 18 bzw. den darüberliegenden Teil 26 des Filters 25 geschoben und an diesem befestigt. Konzentrisch um das Tauchrohr 30 ist ein Außenrohr 40, auch Luftführungsrohr genannt, angeordnet. Auch hier befindet sich zwischen Außenumfang des Tauchrohres 30 und Innenumfang des Außenrohres 40 ein Ringspalt 41 zur Führung der Entlüftungsluft. Das Außenrohr 40, das mit dem Tauchrohr 30 in den Vorratsbehälter 11 hineinragt, darf nicht länger als das Tauchrohr 30 sein und damit nicht weiter in den Flüssigkeitsvorratsbehälter 11 hineinragen. Beispielsweise enden das Außenrohr 40 und das Tauchrohr 30 innerhalb des Vorratsbehälters 11 in einer gemeinsamen Ebene. Das Außenrohr 40 ist an seinem dem Deckelverschlussteil 14 zugewandten Ende nach innen gebördelt und stößt mit seiner gebördelten Stirn 42 an einer Schulter 32 des Tauchrohrs 30 an und ist dort in nicht dargestellter Weise befestigt.

Wie eingangs erwähnt, besitzt die Füllrohranordnung 10 gemäß verschiedener Ausführungsbeispiele nach den Figuren 2 bis 6 jeweils eine labyrinthartige Belüftungs- bzw. Entlüftungsführung 50 bzw. Entlüftungskanalsystem, das vom Innenraum 51 des Flüssigkeitsvorratsbehälters 11 ausgeht und in die Außenatmosphäre 52 mündet. Dieses Entlüftungskanalsystem 50 besitzt verschiedene labyrinthartig zueinander angeordnete Kanal- bzw. Luftführungsabschnitte 53 bis 57, von denen bei allen dargestellten Ausführungsbeispielen der erste Abschnitt 53 durch den Ringraum 41 zwischen Außenrohr 40 und Tauchrohr 30 gebildet ist und vom Innenraum 51 des Vorratsbehälters 11 ausgehend beginnt. Der letzte und bei den dargestellten Ausführungsbeispielen fünfte Luftführungskanalabschnitt 57 ist durch einen Ringspalt 61 zwischen dem Innenumfang des Führungselements 19 und dem Außenumfang des Füllrohres 17 der Zapfpistole 16 gebildet, welcher letzte Abschnitt 57 zur Außenatmosphäre führt. Dabei sind die beiden Luftführungsabschnitte 53 und 57 im Wesentlichen parallel gleichgerichtet angeordnet.

Beim in Figur 2 dargestellten Ausführungsbeispiel gemäß Pfeil A wird am Ende des ersten Luftführungsabschnittes bzw. -kanals 53 die Entlüftungsführung 50 aus ihrer axialen Richtung umfangsseitig des Tauchrohrs 30 nach radial umgelenkt und zwar in einen zweiten Luftführungsabschnitt 54, der durch beispielsweise zwei über den Umfang des Tauchrohres 30 verteilt angeordnete Öffnungen 64 gebildet ist. Es versteht sich, dass über den Umfang des Tauchrohres 30 auch mehr als zwei Luftführungsöffnungen 64 in Form von beispielsweise Schlitzen oder Bohrungen vorgesehen sein können. An diesen zweiten Luftführungsabschnitt 54 schließt sich ein dritter Luftführungsabschnitt 55 an, der durch eine entsprechende Anzahl Öffnungen 65 im Filter 25 bzw. in dessen durchmesserkleinerem Teil 27 vorgesehen ist. Die Öffnungen 64 und 65 sind im dargestellten Ausführungsbeispiel der Figur 2 radial fluchtend miteinander ausgerichtet. Es versteht sich, dass die beiden Öffnungen 64 und 65 in umfangsseitiger Richtung versetzt sein können. Der Luftführungsstrom wird in einem vierten Abschnitt 56 aus einer radialen Richtung in eine axiale Richtung umgelenkt, die der ursprünglichen radialen Strömungsrichtung im ersten Abschnitt 53 entgegengesetzt ist. Dieser vierte Luftführungsabschnitt 56 ist durch einen Ringspalt 60 gebildet, der in dem durchmesserkleineren Teil 22 des Führungselements 19 dadurch gebildet ist, dass dieser Teil 22 mit einer vom Ende des Führungselements 19 ausgehenden Umfangsnut 66 versehen ist. An der Öffnungsseite dieser Umfangsnut 66 und damit am inneren freien Ende 20 des Führungselements 19 wird der Luftführungsstrom von seiner axialen Richtung in eine radiale Richtung um das Stirnende 20 des Führungselementes 19 und danach in eine entgegengesetzte axiale Richtung umgelenkt, so dass die Luft in den fünften und letzten Abschnitt 57 in Form des Ringspaltes 61 gelangt.

Das Ausführungsbeispiel gemäß Figur 3 unterscheidet sich vom ersten Ausführungsbeispiel nach Figur 2 dadurch, dass die Luftführung im Entlüftungssystem 50 nach Durchdringen der Filterwandung in der Öffnung 65 in dem Ringraum 60 bzw. 66 des vierten Abschnitts 56 in dieselbe Richtung wie die Zugangsrichtung innerhalb des ersten Abschnitts 53 verläuft und danach nochmals in eine radiale Richtung umgelenkt wird, was durch den vierten Abschnitt 56 aufgrund einer radialen Öffnung 67 in der Wandung des Führungselements 19 (statt an deren Stirnende 20 nach Figur 2) ermöglicht ist. Dieser vierte Luftführungsabschnitt 56 ist mit dem genannten fünften und letzten Luftführungsabschnitt 57 verbunden.

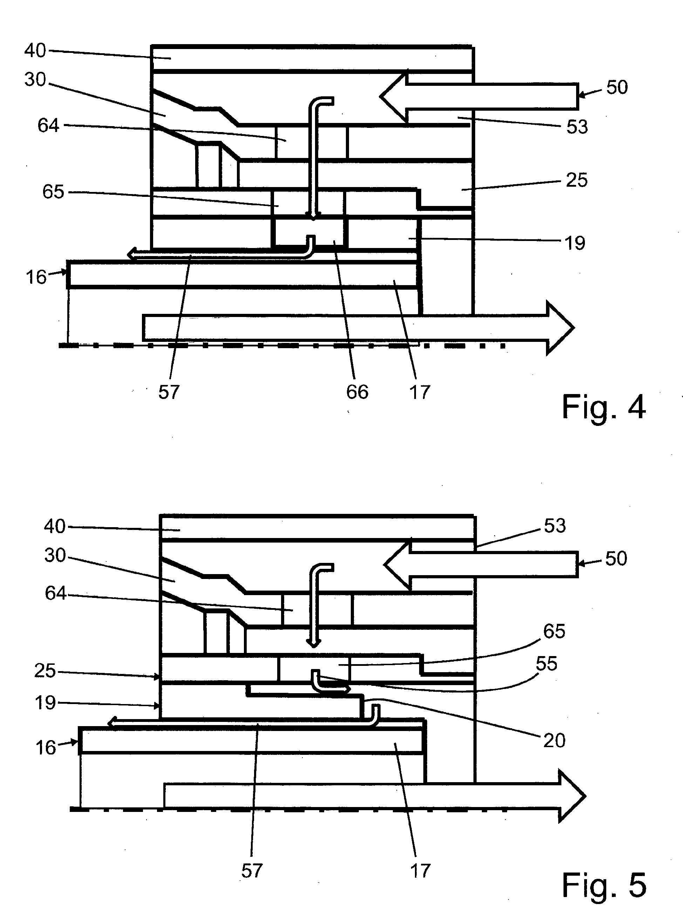

Beim dritten Ausführungsbeispiel nach Figur 4 ist anders als bei den vorhergehend genannten beiden Ausführungsbeispielen (Figuren 2 und 3) eine ausschließlich radiale Luftführung zwischen dem ersten Abschnitt 53 und dem fünften Abschnitt 57 vorgesehen, indem die Öffnungen 64, 65 und 67 im Tauchrohr 30, im Filter 25 und im Führungselement 19 radial miteinander fluchten. Es versteht sich, dass es auch möglich ist, dass diese Öffnungen 64, 65, 67 ganz oder teilweise jeweils in Umfangsrichtung zueinander versetzt sind.

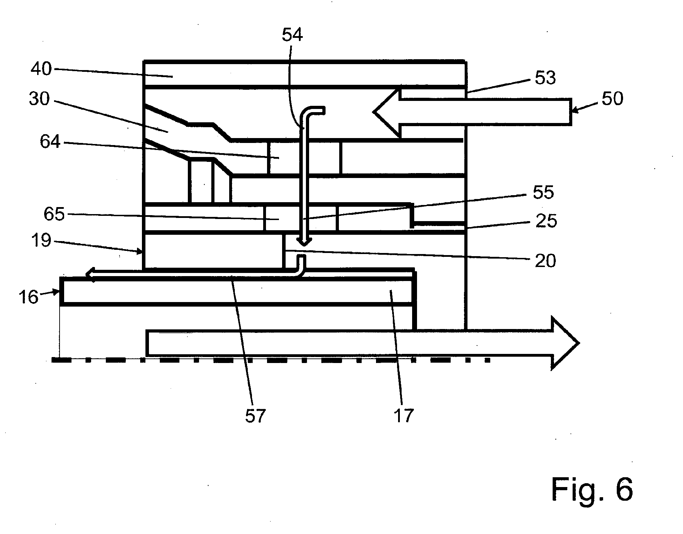

Beim vierten Ausführungsbeispiel gemäß Figur 5 ist die Entlüftungsführung 50 ähnlich dem ersten Ausführungsbeispiel nach Figur 2 ausgebildet, wobei der einzige Unterschied darin besteht, dass das Führungselement 19 gegenüber der Länge des eingetauchten Auslaufrohres 17 der Zapfpistole 16 verkürzt ist, so dass der Entlüftungsweg um das Stirnende 20 des Führungselementes 19 kürzer ist. Das fünfte Ausführungsbeispiel gemäß Figur 6 verwendet eine nochmals längenverkürzte Ausbildung des Führungselementes 19, derart, dass dessen Stirnende 20 die Öffnungen 64 und 65 des zweiten und dritten Abschnitts 54 und 55, die miteinander fluchten, nur noch zu 1/3 überdeckt und das Führungselement 19 keine Umfangsnut besitzt, so dass die Luft am Stirnende 20 vorbeistreicht und danach in die axiale Richtung des fünften Abschnitts 57 umgelenkt wird.

Bei den dargestellten Ausführungsbeispielen ist der erste Luftführungsabschnitt 53 durch den Ringspalt 41 zwischen Tauchrohr 30 und Außenrohr 40 gebildet. Gemäß einem nicht dargestellten weiteren Ausführungsbeispiel der Erfindung kann das Außenrohr 40 entfallen, wenn das Tauchrohr mit einem ersten Luftführungsabschnitt 53 integriert ausgebildet ist. Dies kann beispielsweise dadurch erfolgen, dass die Wandung des Tauchrohrs 30 mit über den Umfang gleichmäßig verteilt angeordneten axialen Entlüftungsbohrungen versehen ist, die im Innenraum des Vorratsbehälters 11 beginnen und am Ende miteinander verbunden und zum zweiten Luftführungsabschnitt 54 führen. Eine andere Möglichkeit besteht darin, eine Vielzahl von Röhrchen kreisförmig derart anzuordnen, dass sie eine geschlossene Wandung für das Tauchrohr 30 bilden, so dass die den ersten Luftführungsabschnitt bildenden Röhrchen im Innenraum des Vorratsbehälters beginnen und am Ende des Tauchrohrs 30 beispielsweise in einen Deckel münden, dessen Innenraum mit dem zweiten Luftführungsabschnitt 54 verbunden ist.

Bei einer üblicherweise nicht für Kraftfahrzeuge geeigneten Anwendung der Füllrohranordnung 10 kann in nicht dargestellter Weise das Filter 25 entfallen, wobei die Entlüftungsführung 50 ohne ihren dritten Abschnitt im Wesentlichen entsprechend den beschriebenen Ausführungsbeispielen gleich bleibt.

Wenn auch gemäß Figur 1 die Füllrohranordnung 10 unmittelbar an einem Schraubstutzen 13 des Flüssigkeitsvorratsbehälters 11 befestigt ist und durch diesen mit ihrer starren Doppelrohranordnung aus Tauchrohr 30 und Außenrohr 40 in den Behälter 11 eintaucht, versteht es sich, dass erfindungsgemäß auch eine Füllrohranordnung 10 vorgesehen sein kann, deren Deckelverschlussteil 14 und Stutzenteil 18 sowie Führungselement 19 als Zugang für eine Zapfpistole 16 einerseits und der Flüssigkeitsvorratsbehälter 11 mit seiner Befüllöffnung andererseits räumlich relativ weit auseinanderliegen. Bei diesem nicht dargestellten Ausführungsbeispiel sind das Tauchrohr 30 und das Außenrohr 40 jeweils als flexibler Schlauch ausgeführt. Die beiden Schläuche sind konzentrisch ineinander und tauchen mit ihren dem Deckelverschlussteil 14 abgewandten Enden bis zur vorgesehenen Füllhöhe in den Vorratsbehälter 11 ein, wobei auch hier das innere Tauchrohr 30 weiter als das Außenrohr 40 eintaucht.

## Patentansprüche

1. Füllrohranordnung (10) für einen
Flüssigkeitsvorratsbehälter (11) für beispielsweise ein Kraftfahrzeug,
mit einem Tauchrohr (30), das in den Flüssigkeitsvorratsbehälter (11) reicht,
mit einem innerhalb eines Zugangsbereichs der Füllrohranordnung angeordneten Führungselement (19) für ein Auslaufrohr (17) einer Zapfpistole (16) und mit einem Deckelverschlussteil (14), an dem das Führungselement (19) gehalten ist,
**gekennzeichnet durch**
eine labyrinthartige Entlüftungsführung (50) vom Innenraum (51) des Vorratsbehälters (11) zur Außenatmosphäre (57), wobei die Entlüftungsführung (50)
einen axialen und längs des Tauchrohres (30) verlaufenden ersten Abschnitt (53),
einen radial in das Tauchrohr (30) verlaufenden zweiten Abschnitt (54),
einen radial in das Führungselement (19) oder an diesem vorbeiführenden vierten Abschnitt (56), und einen axial zwischen dem Führungselement (19) und dem Auslaufrohr (17) der Zapfpistole (16) nach außen verlaufenden fünften Abschnitt (57)
aufweist.

2. Füllrohranordnung nach Anspruch 1, **dadurch gekennzeichnet, dass** innerhalb des Tauchrohres (30) ein Filter (25) angeordnet ist, innerhalb dem das Führungselement (19) vorgesehen ist, und dass ein radial in das Filter (25) führender dritter Abschnitt (55) der Entlüftungsführung (50) vorgesehen ist.

3. Füllrohranordnung nach den Ansprüchen 1 und 2, **dadurch gekennzeichnet, dass** zwischen dem dritten Abschnitt (55) in das Filter und dem vierten Abschnitt (56) in das Führungselement (19) ein Versatz vorgesehen ist.

4. Füllrohranordnung nach mindestens einem der Ansprüche 1 bis 3, **dadurch gekennzeichnet, dass** das Tauchrohr (30) vorzugsweise umfangswandseitig mit in Achsrichtung verlaufenden, integrierten Entlüftungskanälen als erstem Abschnitt (53) versehen ist.

5. Füllrohranordnung nach mindestens einem der Ansprüche 1 bis 3, **dadurch gekennzeichnet, dass** das Tauchrohr (30) von einem vorzugsweise konzentrischen Außenrohr (40) umgeben ist, wobei ein dadurch gebildeter axial verlaufender Ringspalt (41) den ersten Entlüftungsabschnitt (53) bildet.

6. Füllrohranordung nach den Ansprüchen 1 und 4, **dadurch gekennzeichnet, dass** der zweite Abschnitt (54) durch mindestens zwei über den Umfang der Wandung des Tauchrohres (30) angeordnete radiale Luftöffnungen (64) gebildet ist.

7. Füllrohranordnung nach mindestens einem der Ansprüche 2 bis 6, **dadurch gekennzeichnet, dass** der dritte Abschnitt (55) durch mindestens zwei über den Umfang der geschlossenen Wandung des Filters (25) angeordnete radiale Luftöffnungen (65) gebildet ist.

8. Füllrohranordnung nach den Ansprüchen 6 und 7, **dadurch gekennzeichnet, dass** die beiden radialen Luftöffnungen (64, 65) von Tauchrohr (30) und Filter (25) miteinander fluchten oder axial und/oder umfangsseitig zueinander versetzt sind.

9. Füllrohranordnung nach Anspruch 8, **dadurch gekennzeichnet, dass** der axiale Versatz der beiden radialen Luftöffnungen (64, 65) zu einer Strömung gegen oder mit der Richtung der in die Atmosphäre (52) strömenden Luft gerichtet ist.

10. Füllrohranordnung nach Anspruch 9, **dadurch gekennzeichnet, dass** zwischen den Wandungen von Filter (25) und Führungselement (19) ein axialer nach außen geschlossener Ringspalt (60) besteht.

11. Füllrohranordnung nach mindestens einem der vorhergehenden Ansprüche, **dadurch gekennzeichnet, dass** das Außenrohr (40) eine axiale Länge aufweist, die gleich oder kürzer als die des Tauchrohrs (30) ist.

12. Füllrohranordnung nach Anspruch 11, **dadurch gekennzeichnet, dass** das Außenrohr (40) und Tauchrohr (30) als flexible Schläuche ausgebildet sind.

13. Füllrohranordnung nach mindestens einem der vorhergehenden Ansprüche, **dadurch gekennzeichnet, dass** der erste Abschnitt (53) der Entlüftungsführung (50) innerhalb des Flüssigkeitsvorratsbehälters (11) beginnt und in einem Bereich des Führungselementes (19) in den zweiten Abschnitt (54) der Entlüftungsführung (50) übergeht.

## Claims

1. A filling pipe assembly (10) for a liquid reservoir (11), e.g. for a motor vehicle, comprising
an immersion pipe (30) extending into said liquid reservoir (11),
a guiding element (19) for a discharging pipe (17) of a fuel nozzle (16) arranged within a access region of said filling pipe assembly, and
a lid closure part (14) on which said guiding element (19) is retained, **characterized by**
a labyrinthine vent guide (50) from the interior (51) of said reservoir (11) to the outer atmosphere (57), said vent guide (50) comprising
a first portion (53) extending axially along said immersion pipe (30),
a second portion (54) extending radially into said immersion pipe (30),
a fourth portion (56) leading radially into or bypassing said guiding element (19), and
a fifth portion (57) extending outwardly axially between said guiding element (19) and said discharging pipe (17) of said fuel nozzle (16).

2. The filling pipe assembly according to claim 1, **characterized in that** a filter (25) is arranged within said immersion pipe (30) and said guiding element (19) is provided within said filter, and that a third portion (55) of said vent guide (50) radially leading into said filter (25) is provided.

3. The filling pipe assembly according to the claims 1 and 2, **characterized in that** an offset is provided between said third portion (55) leading into said filter and said fourth portion (56) leading into said guiding element (19).

4. The filling pipe assembly according to at least one of the claims 1 to 3, **characterized in that** said immersion pipe (30) is provided with integrated vent channels on the side of its circumference wall preferably extending in an axial direction and serving as said first portion (53).

5. The filling pipe assembly according to at least one of the claims 1 to 3, **characterized in that** said immersion pipe (30) is enclosed by a preferably concentric outer pipe (40), wherein an axially extending annular space formed thereby forms said first vent portion (53).

6. The filling pipe assembly according to the claims 1 and 4, **characterized in that** said second portion (54) is formed by at least two radial air openings (64) arranged over the circumference of the wall of said immersion pipe (30).

7. The filling pipe assembly according to one of the claims 2 to 6, **characterized in that** said third portion (55) is formed by at least two radial air openings (65) arranged over the circumference of the closed wall of said filter (25).

8. The filling pipe assembly according to the claims 6 and 7, **characterized in that** both said radial air openings (64, 65) of said immersion pipe (30) and said filter (25), respectively, are aligned to each other or are axially and/or circumferentially offset to each other.

9. The filling pipe assembly according to claim 8, **characterized in that** said axial offset of both said radial air openings (64, 65) is directed to a flow opposite to or in the direction of the air flowing into the atmosphere (52).

10. The filling pipe assembly according to claim 9, **characterized in that** a axial annular space (60) which is closed to the outside is provided between the walls of said filter (25) and said guiding element (19), respectively.

11. The filling pipe assembly according to at least one of the preceding claims, **characterized in that** said outer pipe (40) comprises an axial length which is equal to or shorter than that of the said immersion pipe (30).

12. The filling pipe assembly according to claim 11, **characterized in that** said outer pipe (40) and said immersion pipe (30) are formed as flexible hoses.

13. The filling pipe assembly according to at least one of the preceding claims, **characterized in that** said first portion (53) of said vent guide (15) begins within said liquid reservoir (11) and passes over into said second portion (54) of said vent guide (15) within a region of said guiding element (19).

## Revendications

1. Ensemble tuyau de remplissage (10) pour un réservoir de stockage de liquide (11), par exemple pour un véhicule automobile, pourvu
d'un tube plongeur (30), lequel parvient jusque dans le réservoir de stockage de liquide (11),
d'un élément de guidage (19) disposé à l'intérieur d'une zone d'accès de l'ensemble tuyau de remplissage pour un tuyau d'évacuation (17) d'un pistolet de remplissage de carburant (16) et
d'une partie de fermeture de couvercle (14) sur laquelle est retenu l'élément de guidage (19),
**caractérisé par**
un guide de ventilation (50) du type en labyrinthe allant de l'espace intérieur (51) du réservoir de stockage (11) à l'atmosphère extérieure (57), le guide de ventilation (50) comprenant
une première partie axiale (53) s'étendant le long du tube plongeur (30),
une deuxième partie (54) conduisant radialement dans le tube plongeur (30),
une quatrième partie (56) menant radialement dans l'élément de guidage (19) ou passant devant ce dernier, et
une cinquième partie (57) s'étendant axialement vers l'extérieur entre l'élément de guidage (19) et le tuyau d'évacuation (17) du pistolet de remplissage de carburant (16).

2. Ensemble tuyau de remplissage selon la revendication 1, **caractérisé en ce qu'**un filtre (25), à l'intérieur duquel se situe l'élément de guidage (19), est disposé à l'intérieur du tube plongeur (30), et **en ce qu'**une troisième partie (55) du guide de ventilation (50) conduit radialement dans le filtre (25).

3. Ensemble tuyau de remplissage selon l'une quelconque des revendications 1 et 2, **caractérisé en ce qu'**un décalage est présent entre la troisième partie (55) dans le filtre et la quatrième partie (56) dans l'élément de guidage (19).

4. Ensemble tuyau de remplissage selon l'une quelconque des revendications 1 à 3, **caractérisé en ce que** le tube plongeur (30) est pourvu de préférence côté paroi périphérique de canaux de ventilation intégrés, s'étendant dans la direction axiale, faisant office de première partie (53).

5. Ensemble tuyau de remplissage selon l'une quelconque des revendications 1 à 3, **caractérisé en ce que** le tube plongeur (30) est entouré par un tube extérieur (40) de préférence concentrique, une fente annulaire (41) ainsi formée et s'étendant axialement formant la première partie de ventilation (53).

6. Ensemble tuyau de remplissage selon l'une quelconque des revendications 1 à 4, **caractérisé en ce que** la deuxième partie (54) est formée par au moins deux orifices d'aération radiaux (64) disposés sur toute la périphérie de la paroi du tube plongeur (30).

7. Ensemble tuyau de remplissage selon l'une quelconque des revendications 2 à 6, **caractérisé en ce que** la troisième partie (55) est formée par au moins deux orifices d'aération radiaux (65) disposés sur toute la périphérie de la paroi fermée du filtre (25).

8. Ensemble tuyau de remplissage selon l'une quelconque des revendications 6 et 7, **caractérisé en ce que** les deux orifices d'aération radiaux (64, 65) du tube plongeur (30) et du filtre (25) sont en alignement l'un avec l'autre ou sont décalés l'un par rapport à l'autre axialement et/ou côté périphérie.

9. Ensemble tuyau de remplissage selon la revendication 8, **caractérisé en ce que** le décalage axial des deux orifices d'aération radiaux (64, 65) est orienté en direction d'un écoulement allant à l'encontre ou dans la direction de l'air s'écoulant dans l'atmosphère (52).

10. Ensemble tuyau de remplissage selon la revendication 9, **caractérisé en ce qu'**une fente annulaire (60) axiale fermée vers l'extérieur est présente entre les parois du filtre (25) et de l'élément de guidage (19).

11. Ensemble tuyau de remplissage selon l'une quelconque des revendications précédentes, **caractérisé en ce que** le tuyau extérieur (40) présente une longueur axiale inférieure ou égale à celle du tube plongeur (30).

12. Ensemble tuyau de remplissage selon la revendication 11, **caractérisé en ce que** le tube extérieur (40) et le tube plongeur (30) sont réalisés sous la forme de tuyaux flexibles.

13. Ensemble tuyau de remplissage selon l'une quelconque des revendications précédentes, **caractérisé en ce que** la première partie (53) du guide de ventilation (50) débute à l'intérieur du réservoir de stockage de liquide (11) et passe dans une zone de l'élément de guidage (19) dans la deuxième partie (54) du guide de ventilation (50).
